# EUROPÄISCHE PATENTANMELDUNG

(11) **EP 4 729 234 A2**
(43) Veröffentlichungstag der Anmeldung: **22.04.2026**
(21) Anmeldenummer: 26162663.4
(22) Anmeldetag: 19.03.2019
(51) Int. Cl.: B24D 7/16

(54) **VERBINDUNGSVORRICHTUNG**

(30) Priorität: 19.03.2018 DE 102018106347
(62) Teilanmeldung aus: 19712949.7
(71) Anmelder: Boeck GmbH, 89340 Leipheim (DE)
(72) Erfinder: BÖCK, Jochen, 70182 Stuttgart (DE); BÖCK, Marc, 90489 Nürnberg (DE)
(74) Vertreter: Pfenning, Meinig & Partner mbB

(57) **Zusammenfassung**

Die Erfindung betrifft eine Verbindungsvorrichtung aufweisend ein positives Verbindungselement und ein negatives Verbindungselement, wobei das positive Verbindungselement eine auf einer Grundfläche angeordnete Erhebung aufweist und das negative Verbindungselement eine in einer Kontaktfläche eingebrachte Vertiefung aufweist, in die die Erhebung des positiven Verbindungselements einbringbar ist, wobei das positive und das negative Verbindungselement durch Rotation gegeneinander miteinander verbindbar sind.

## Beschreibung

Die Erfindung betrifft eine Verbindungsvorrichtung aufweisend ein positives Verbindungselement und ein negatives Verbindungselement, wobei das positive Verbindungselement eine auf einer Grundfläche angeordnete Erhebung aufweist und das negative Verbindungselement eine in einer Kontaktfläche eingebrachte Vertiefung aufweist, in die die Erhebung des positiven Verbindungselements einbringbar ist, wobei das positive und das negative Verbindungselement durch Rotation gegeneinander miteinander verbindbar sind.

Die Minimierung von Rüstzeiten stellt ein typisches Ziel von kontinuierlichen Verbesserungsprozessen dar. Daher sind u.a. Lösungen für einen schnellen Werkzeugwechsel gesucht. Die Schnittstelle einer Bearbeitungsmaschine zwischen den Positionierelementen und dem Werkzeug stellt das sogenannte Werkzeugspannsystem dar. Das Werkzeugspannsystem muss sämtlichen technischen Anforderungen wie Genauigkeit, Drehrichtung, Wuchtgüte, Kraft- und Momentübertragung, usw. gerecht werden.

Standardmäßig werden Werkzeuge über lösbare Verbindungen (z.B. Schrauben) mit der Werkzeugaufnahme verbunden. Eine weitere Lösung stellen Schnellspannverschlüsse mit Schneckenkontur dar. Diese Befestigungsmethode erzwingt eine Drehrichtung durch die Schneckenkontur, um ein Lösen durch die Rotation zu verhindern. Durch die Schneckenkontur ergibt sich der Bedarf, die Unwucht auszugleichen.

In DE 10 2015 110 115/ EP 3 108 999 wird eine Vorrichtung zum Bearbeiten eines Werkstücks beansprucht, welche die bereits genannte Schneckenkontur beansprucht und auf einen rechteckigen Körper außerhalb der Mitte der Rechteckfläche angebracht ist. Die außermittige Gestaltung führt im Bearbeitungsprozess zu einem festziehen der Verbindungselemente.

In 10 2016 000 026 584 wird eine ähnliche Schneckenkontur beansprucht, die punktsymmetrisch dreimal im Winkel von 120° versetzt vorhanden ist. Diese Ausführung weist entsprechend der Anzahl der Schneckenkonturen Radialnuten auf der Grundfläche auf, welche zur Arretierung genutzt werden. Die Arretierung erfolgt durch Kugeldruckstücke, die wiederum im Gegenstück eingebracht sind.

Des Weiteren existieren sogenannte Steckkupplungen. Die Sicherung gegen axiales Lösen erfolgt über einen Querbolzen oder kreisförmig angeordnete Kugelelemente, welche über eine meist federbelastete, verschiebbare Hülse gelöst und fixiert werden können und in eine entsprechende Nut des Gegenstücks gedrückt werden. Die Momentenübertragung kann einerseits über einen Querbolzen erfolgen oder ein nicht rotationssymmetrisches Element (z.B. Sechskant) mit entsprechendem Gegenstück. Diese Art der Befestigung der Werkzeuge erfordert die Montage eines werkzeugseitigen Adapters.

Darüber hinaus existieren Steckverbindungen, wie in EP20130186867 oder Schraubverbindungen u.a. auch mit Führungsleisten zur Verdrehsicherung, wie in EP 1 910 024.

Zudem finden sogenannte Klauenkupplungen u.a. im Bereich der Sanitärtechnik Anwendung. Das Funktionsprinzip beruht auf dem Ineinandergreifen von zwei gegenüberliegenden Klauen, die durch Drehen miteinander verbunden werden. Um ein Lösen zu verhindern sind die Klauen mit Widerhaken versehen. Die Verbindung muss axial elastisch (z.B. Dichtung, Feder, usw.) sein, da die Widerhaken einrasten müssen.

Ein Bajonettverschluss findet Anwendung bei der Koppelung einer Kamera mit einem Objektiv. Durch Drehen des Objektivs wird dieses mit der Objektivaufnahme an der Kamera verbunden. Mit einer Drehung von meist 60 bis 90 Grad rastet das Objektiv ein. Zum Lösen des Objektivs bedarf es eines Betätigungsknopfes, der das Objektiv entriegelt.

Der Nockendrehverschluss, auch Twist-Off Schraubdeckel genannt, wird beim Verschrauben von Konservengläsern verwendet. Nockendeckel sind nach DIN EN ISO 9100 normiert. Im Gegensatz zu Schraubdeckeln bewirken die nach dem Schließen unter Federspannung stehenden Nocken einen besonders festen Verschluss der Behältnisse.

Aufgabe der vorliegenden Erfindung ist es, eine Verbindungsvorrichtung anzugeben, die so ausgestaltet ist, dass zwei Verbindungselemente so durch drehen miteinander verbindbar sind, dass Drehmomente in beide Richtungen um eine Drehachse von einem auf das andere Verbindungselement übertragbar sind.

Diese Aufgabe wird gelöst durch die Verbindungsvorrichtungen nach den Ansprüchen 1, 2 und 3. Die jeweiligen abhängigen Ansprüche geben vorteilhafte Weiterbildungen der erfindungsgemäßen Verbindungsvorrichtungen an.

Erfindungsgemäß wird eine Verbindungsvorrichtung bereitgestellt, die ein erstes, als positives Verbindungselement bezeichnetes, Verbindungselement sowie ein zweites, als ein negatives Verbindungselement bezeichnetes, Verbindungselement aufweist.

Das positive Verbindungselement weist eine Grundfläche auf, auf der eine Erhebung angeordnet ist. Die Erhebung kann dabei vorteilhaft einen Absatz auf der Grundfläche bilden. Insbesondere kann die Erhebung wie eine Mesa auf der Grundfläche ausgebildet sein. Vorteilhafterweise kann die Grundfläche im Wesentlichen eben sein.

Erfindungsgemäß weist die Erhebung n Zapfen auf, wobei n eine ganze Zahl größer oder gleich 2 ist. Die n Zapfen sind dabei um eine gemeinsame gedachte Mittelachse angeordnet, die senkrecht auf der Grundfläche steht. Jeder der Zapfen weist eine Endfläche auf, die diesen Zapfen in zur Mittelachse radialer Richtung begrenzt.

In einer vorteilhaften Ausgestaltung können die Zapfen jeweils als Teile der Erhebung ausgestaltet sein, die über einen Grundkörper oder Zentralbereich der Erhebung in einem begrenzten Winkelbereich in radialer Richtung hinaus stehen.

Erfindungsgemäß schließen die Endflächen der Zapfen jeweils mit der Grundfläche zumindest einen Winkel von kleiner als 90° ein. Die Endflächen bilden also mit der Grundfläche jeweils zumindest einen spitzen Winkel, wodurch ein Teil der Erhebung über die Grundfläche überstehen kann. Der Winkel kann hier der radial nach außen gerichtete Winkel sein, der Winkel liegt also außerhalb des Verbindungselements. Die Erhebung kann vorteilhaft einen die Mittelachse umgebenden Zentralbereich aufweisen, der besonders vorteilhaft einen um die Mittelachse kreisförmig verlaufenden Rand hat. Die Zapfen können dann als an diesem Rand angeordnet und über diesen hinausstehend angesehen werden.

Vorteilhafterweise haben die Zapfen radial verlaufende Seitenflächen, die jeweils an den Enden der Endflächen in Umfangsrichtung anstoßen. Die radial verlaufenden Seitenflächen des gleichen Zapfens schließen vorzugsweise jeweils einen Winkel um die Mittelachse von größer oder gleich 5°, besonders bevorzugt größer oder gleich 10°, besonders bevorzugt von 15° und/oder von kleiner oder gleich 25°, besonders bevorzugt kleiner oder gleich 20° ein. In dieser Ausgestaltung bestimmt der Winkel zwischen den Seitenflächen des jeweiligen Zapfens zusammen mit dem Abstand der Endfläche von der Mittelachse die Länge der Endfläche in Umfangsrichtung um die Mittelachse.

Besonders vorteilhaft ist eine Ausgestaltung, in der der genannte Zentralbereich der Erhebung einen kreisförmigen Umfang um die Mittelachse hat und die Zapfen jeweils mit radial verlaufenden Seitenflächen und einer sich zwischen diesen Seitenflächen erstreckenden, entlang einer Kreislinie verlaufenden Endflächen über den Rand des Zentralbereichs erstrecken. Vorteilhafterweise ist eine der Grundfläche abgewandte Oberfläche der Erhebung parallel zum Verlauf der Grundfläche und/oder eben.

Das negative Verbindungselement weist erfindungsgemäß eine Kontaktfläche mit einer in die Kontaktfläche eingebrachten Vertiefung auf. Die Kontaktfläche ist dafür vorgesehen, im verbundenen Zustand an der Grundfläche des positiven Verbindungselementes anzuliegen. Die Kontaktfläche kann daher vorteilhaft so ausgestaltet sein, dass sie im verbunden Zustand parallel verläuft zur der dem negativen Verbindungselement zugewandten Grundfläche des positiven Verbindungselementes. Besonders bevorzugt kann die Kontaktfläche eben sein.

Erfindungsgemäß wird die Vertiefung in radialer Richtung bezüglich einer senkrecht auf der Kontaktfläche stehenden Vertiefungsachse durch eine Innenwand der Vertiefung begrenzt. Die Innenwand der Vertiefung kann sich dabei vorteilhaft von einer Bodenfläche der Vertiefung bis zur Kontaktfläche erstrecken. Die hier genannten Achsen sind als gedachte Achsen zur Orientierung zu verstehen.

Erfindungsgemäß weist die Innenwand n Einsetzabschnitte auf, vorzugsweise genau n, die jeweils bezogen auf die Vertiefungsachse einen Einsetzradius haben. Der Einsetzradius ist also der Abstand der Innenwand im Bereich des Einsetzabschnittes von der Vertiefungsachse. Mit n wird hier wiederum eine Zahl größer oder gleich 2 benannt. Erfindungsgemäß weist die Innenwand außerdem 2n Halteabschnitte auf, vorzugsweise genau 2n, wobei an jedem der n Einsetzabschnitte in beide Richtungen entlang der Innenwand um die Vertiefungsachse jeweils einer der Halteabschnitte angrenzt. An jedem der Einsetzabschnitte kann also in beide Umfangsrichtungen um die Vertiefungsachse jeweils einer der Halteabschnitte angrenzen.

Im Bereich jedes der Halteabschnitte schließt die Innenwand mit der Kontaktfläche einen Winkel von größer als 270° ein. Hier kann als Kontaktfläche z. B. jener Bereich der nach oben in Richtung der Vertiefungsachse orientierten Oberfläche des negativen Verbindungelementes angesehen werden, in dem nicht die Vertiefung vorliegt. Wird die Vertiefung durch eine Bodenfläche nach unten begrenzt, so kann die Innenwand im Bereich jedes der Halteabschnitte mit dieser Bodenfläche einen Winkel von kleiner als 90°, also einen spitzen Winkel, einschließen. Gemeint sind hier vorteilhaft jene außerhalb des negativen Verbindungselements liegenden Winkel. Die Bodenfläche kann dabei vorteilhaft so ausgestaltet sein, dass sie im verbundenen Zustand parallel verläuft zur Oberfläche der Erhebung des positiven Verbindungselementes und/oder eben ist. Die Bodenfläche kann gegebenenfalls in die Bodenfläche eingebrachte Strukturen aufweisen, sodass die Bodenfläche in diesem Fall im Bereich außerhalb derartiger Strukturen parallel verläuft zur Oberfläche der Erhebung und/oder zu dieser parallel ist.

Im Bereich jedes der Halteabschnitte hat die Innenwand einen als Halteabstand bezeichneten maximalen Abstand von der Vertiefungsachse, der kleiner ist als der Einsetzradius, also der Abstand der Innenwand von der Vertiefungsachse in den Einsetzabschnitten. Vorteilhafterweise kann der Halteabstand der Abstand der Innenwand im Bereich der Halteabschnitte an jenem Punkt sein, an dem die Innenwand an die Kontaktfläche angrenzt.

In einem Zustand, in dem das positive Verbindungselement mit dem negativen Verbindungselement verbunden ist, soll ein Abstand der Endflächen der Zapfen von der Mittelachse kleiner oder gleich sein dem Einsetzradius, sodass die Zapfen an den Einsetzabschnitten in die Vertiefung einbringbar sind. Außerdem soll der Abstand der Endflächen der Zapfen von der Mittelachse größer sein als der beschriebene Halteabstand. Werden die Zapfen zunächst an den Einsetzabschnitten in die Vertiefung eingebracht und wird dann das positive Verbindungselement gegenüber dem negativen Verbindungselement so gedreht, dass die Zapfen an der Innenwand der Vertiefung im Bereich der Halteabschnitte liegen, so wird hierdurch die Erhebung des positiven Verbindungselementes in der Vertiefung gehalten. Dadurch, dass die Halteabschnitte jeweils beidseitig an die Einsetzabschnitte angrenzen, kann ein solcher haltender Zustand durch Drehung des positiven Verbindungselementes gegenüber dem negativen Verbindungselement in beide Richtungen um die Vertiefungsachse oder die Mittelachse erreicht werden.

In einer vorteilhaften Ausgestaltung der Erfindung können die Endflächen der Zapfen und vorteilhaft die Zapfen selbst jeweils in einer Richtung entlang eines Umfangs um die Mittelachse symmetrisch sein bezüglich einer Mitte der jeweiligen Endfläche. Als Mitte der Endfläche kann dabei z. B. jener Winkel angesehen werden, der gerade die Winkelhalbierende jener Winkel ist, in denen sich die Seitenflächen des entsprechenden Zapfens erstrecken, oder die Mitte jener Strecke entlang des Umfangs, entlang derer sich die Endfläche erstreckt.

In einer vorteilhaften Ausgestaltung der Erfindung können alle jeweils benachbarten Zapfen zueinander den gleichen Winkel einschließen. Insbesondere können alle Mitten der Endflächen jeweils benachbarter Zapfen zueinander den gleichen Winkel um die Mittelachse einschließen. In entsprechender Weise können jeweils benachbarte der Einsetzabschnitte und/oder Mitten benachbarter Einsetzabschnitte jeweils den gleichen Winkel um die Vertiefungsachse einschließen. In dieser Ausgestaltung kann die Verbindungsvorrichtung für rotierende Anwendungen ohne Unwucht realisiert werden.

In vorteilhaften Ausgestaltung der Erfindung können die Endflächen der Zapfen n-zählig drehsymmetrisch um die Mittelachse verlaufen. In entsprechender Weise können auch die Einsetzabschnitte des negativen Verbindungselementes n-zählig drehsymmetrisch um die Vertiefungsachse verlaufen. Auch durch diese Ausgestaltung kann die Verbindungsvorrichtung für rotierende Anwendungen frei von Unwucht realisiert werden.

In einer vorteilhaften Ausgestaltung der Erfindung kann sich der Winkel, den die Endflächen mit der Grundfläche einschließen, von einer Mitte der Endfläche zu einem Rand der Endfläche in Richtung des Umfanges um die Mittelachse verkleinern. In dieser Ausgestaltung kann der Winkel, den die Halteabschnitte mit der Kontaktfläche oder gegebenenfalls der Bodenfläche der Vertiefung einschließen, konstant sein. Durch den sich verändernden Winkel der Endflächen kann sich das positive Verbindungselement in der Vertiefung festziehen.

Vorteilhafterweise können alle Endflächen der Zapfen parallel verlaufen zu einer gemeinsamen Kreislinie. Besonders bevorzugt verlaufen alle Endflächen bei Betrachtung in einem gegeben Abstand von der Grundfläche auf einer gemeinsamen Kreislinie.

In einer vorteilhaften Ausgestaltung der Erfindung kann die Grundfläche einen kreisförmigen Umfang haben, es sind jedoch auch andere Umfangsgeometrien möglich, wie beispielsweise quadratische oder rechteckige.

In einer vorteilhaften Ausgestaltung der Erfindung kann sich der Winkel, den die Innenwand der Vertiefung im Bereich der Halteabschnitte mit der Kontaktfläche einschließt vom jeweiligen Einsetzabschnitt ausgesehen, an den der entsprechende Halteabschnitt angrenzt, vergrößern. Sofern die Vertiefung eine Bodenfläche hat, die sie nach unten begrenzt, kann in entsprechender Weise der Winkel, den die Innenwand im Bereich der Halteabschnitte mit dieser Bodenfläche einschließt vom jeweiligen Einsetzabschnitt ausgehenden gesehen verkleinern. Durch diese Ausgestaltung kann erreicht werden, dass sich das positive Verbindungselement nach dem Einsetzen im Bereich der Einsetzabschnitte durch Drehung um die Vertiefungsachse beziehungsweise die Mittelachse festzieht.

In einer vorteilhaften Ausgestaltung der Erfindung kann die Innenwand der Vertiefung angrenzend an jeden der Halteabschnitte einen Stoppbereich aufweisen. Dabei kann der Stoppbereich den jeweiligen Halteabschnitt an seiner jenem Einsetzabschnitt abgewandten Ende begrenzen, an dem der entsprechende Halteabschnitt angrenzt. Die Innenwand kann im Bereich dieses Stoppbereichs einen Abstand von der Vertiefungsachse haben, der kleiner ist, als der kleinste Abstand der Innenwand von der Vertiefungsachse im Bereich des entsprechenden Halteabschnitts. An diesem Stoppbereich kann der entsprechende Zapfen des positiven Verbindungselementes bei Drehung des positiven Verbindungselementes gegenüber dem negativen Verbindungselement nach einsetzen im Einsetzbereich und nach durchlaufen des Haltebereichs anstoßen, sodass ein Überdrehen verhindert wird.

In einer vorteilhaften Ausgestaltung kann die Kontaktfläche einen kreisförmigen Umfang haben, es ist aber auch möglich, dass die Kontaktfläche einen quadratischen oder rechteckigen oder anders geformten Umfang hat.

Besonders vorteilhaft kann das negative Verbindungselement ein Formelement aufweisen, wobei das Formelement durch eine zylinderförmige Wand in radialer Richtung begrenzt wird, deren Zylinderachse senkrecht zur Kontaktfläche steht und über eine Ebene hinaus steht, in der sich die Kontaktfläche erstreckt. Vorzugsweise ist seine Zylinderachse koaxial zur Vertiefungsachse. Es kann dann in entsprechender Weise das positive Verbindungselement eine Öffnung um die Mittelachse aufweisen, deren Innendurchmesser gleich dem Außendurchmesser der zylinderförmigen Wand ist. Alternativ kann das positive Element ein Formelement ausweisen, wobei das Formelement durch eine zylinderförmige Wand begrenzt wird, deren Zylinderachse senkrecht zur Grundfläche steht und das über die Oberfläche der Erhebung hinaus steht. Vorzugsweise ist die Zylinderachse koaxial zur Mittelachse. Es kann dann das negative Verbindungselement eine Öffnung um die Vertiefungsachse aufweisen, deren Innendurchmesser gleich dem Außendurchmesser der zylinderförmigen Wand des Formelementes ist.

In einer besonders vorteilhaften Ausgestaltung der Erfindung kann das positive Verbindungselement auf einer der Erhebung abgewandten Seite der Grundfläche ein Schleifmittel aufweisen oder das negative Verbindungselement auf seine der Vertiefung abgewandten Seite ein Schleifmittel aufweisen. Vorteilhafterweise kann die Verbindungsvorrichtung als Werkzeugspannsystem ausgestaltet sein.

In einer vorteilhaften Ausgestaltung der Erfindung können in den Boden der Vertiefung Bohrungen eingebracht sein, in welche Stifte zur Selektion der erlaubten Drehrichtung des positiven Verbindungselementes gegenüber dem negativen Verbindungselement eingesetzt werden können. Dabei sind vorzugsweise die Bohrungen so angeordnet, dass, wenn das positive Verbindungselement in das negative Verbindungselement eingesetzt ist, in die Bohrungen eingesetzte Stifte gegen eine der Seitenflächen der Zapfen stoßen. Vorteilhafterweise ist der Abstand der Bohrungen von der Vertiefungsachse kleiner als der Abstand dann der Innenwand von der Vertiefungsachse, aber gegebenenfalls größer als ein Abstand eines gegebenenfalls vorgesehenen Zentralbereichs des positiven Verbindungselementes von der Mittelachse.

Die Erfindung ermöglicht eine Verbindung zweier Verbindungselemente durch Eindrehen in beide Richtungen. Durch den vorteilhaften symmetrischen Aufbau ist die Erfindung vorteilhaft hinsichtlich des Massenschwerpunktes beziehungsweise Unwucht, da bei einer rotierenden Ausführung der Schwerpunkt auf der Rotationsachse liegt, die mit der Mittelachse beziehungsweise der Vertiefungsachse übereinstimmen kann.

In folgenden sollen einige weitere vorteilhafte optionale Ausführungsformen 1 bis 14 der Erfindung angegeben werden.
1. Verbindungsvorrichtung aufweisend
   ein positives Verbindungselement und
   ein negatives Verbindungselement,
   wobei das positive Verbindungselement eine Grundfläche und eine auf der Grundfläche (3) angeordnete Erhebung (5) aufweist,
   wobei die Erhebung n Zapfen (11a, 11b, 11c), mit n größer oder gleich zwei, aufweist, wobei die n Zapfen um eine gemeinsame Mittelachse angeordnet sind, die senkrecht auf der Grundfläche steht,
   wobei jeder der Zapfen eine Endfläche (13a, 13b, 13c)aufweist, die ihn in zur Mittelachse radialer Richtung begrenzt,
   wobei die Endflächen mit der Grundfläche zumindest einen Winkel von kleiner als 90° einschließen,
   wobei das negative Verbindungselement (2) eine Kontaktfläche (4) mit einer in der Kontaktfläche eingebrachten Vertiefung (6) aufweist,
   wobei die Vertiefung in zu einer senkrecht auf der Kontaktfläche stehenden Vertiefungsachse radialer Richtung durch eine Innenwand der Vertiefung begrenzt wird,
   wobei die Innenwand n Einsetzabschnitte (10) mit einem Einsetzradius bezogen auf die Vertiefungsachse aufweist,
   wobei die Innenwand 2n Halteabschnitte aufweist,
   wobei an jeden der n Einsetzabschnitte in beide Richtungen entlang der Innenwand um die Vertiefungsachse jeweils einer der Halteabschnitte angrenzt,
   wobei die Innenwand im Bereich jedes der Halteabschnitte mit der Kontaktfläche einen Winkel von größer als 270° einschließt und einen als Halteabstand bezeichneten maximalen Abstand von der Vertiefungsachse hat, der kleiner ist, als der Einsetzradius,
   wobei ein Abstand der Endflächen von der Mittelachse kleiner oder gleich dem Einsetzradius ist und größer ist als der Halteabstand.
2. Verbindungsvorrichtung aufweisend ein positives Verbindungselement,
   wobei das positive Verbindungselement eine Grundfläche und eine auf der Grundfläche angeordnete Erhebung aufweist,
   wobei die Erhebung n Zapfen, mit n größer oder gleich zwei, aufweist, wobei die n Zapfen um eine gemeinsame Mittelachse angeordnet sind, die senkrecht auf der Grundfläche steht,
   wobei jeder der Zapfen eine Endfläche aufweist, die ihn in zur Mittelachse radialer Richtung begrenzt,
   wobei die Endflächen mit der Grundfläche zumindest einen Winkel von kleiner als 90° einschließen,
   wobei die Grundflächen der Zapfen jeweils in einer Richtung entlang eines Umfangs symmetrisch sind um eine Mitte ihrer Endfläche.
3. Verbindungsvorrichtung aufweisend ein negatives Verbindungselement,
   wobei das negative Verbindungselement eine Kontaktfläche mit einer in der Kontaktfläche eingebrachten Vertiefung aufweist,
   wobei die Vertiefung in zu einer senkrecht auf der Kontaktfläche stehenden Vertiefungsachse radialer Richtung durch eine Innenwand der Vertiefung begrenzt wird,
   wobei die Innenwand n Einsetzabschnitte mit einem Einsetzradius bezogen auf die Vertiefungsachse aufweist, mit n größer oder gleich zwei,
   wobei die Innenwand 2n Halteabschnitte aufweist,
   wobei an jeden der n Einsetzabschnitte in beide Richtungen entlang der Innenwand um die Vertiefungsachse jeweils einer der Halteabschnitte angrenzt,
   wobei die Innenwand im Bereich jedes der Halteabschnitte mit der Kontaktfläche einen Winkel von größer als 270° einschließt und einen als Halteabstand bezeichneten maximalen Abstand der Vertiefungsachse hat, der kleiner ist, als der Einsetzradius,
4. Verbindungsvorrichtung nach einer der optionalen Ausführungsformen 1 oder 2, wobei die Zapfen jeweils symmetrisch zu einer Mitte der entsprechenden Endfläche in Richtung eines Umfangs um die Mittelachse sind.
5. Verbindungsvorrichtung nach einer der optionalen Ausführungsformen 1, 2 oder 4, wobei alle jeweils benachbarten der Zapfen und/oder alle Mitten der Endflächen jeweils benachbarter Zapfen zueinander einen gleichen Winkel um die Mittelachse einschließen.
6. Verbindungsvorrichtung nach einer der optionalen Ausführungsformen 1, 2, 4 oder 5, wobei alle Endflächen zusammen n-zählig drehsymmetrisch um die Mittelachse verlaufen.
7. Verbindungsvorrichtung nach einer der optionalen Ausführungsformen 1, 2 oder 4 bis 6, wobei sich der Winkel, den die Endflächen mit der Grundfläche einschließen von einer Mitte der Endfläche zu einem Rand der Endfläche in Richtung eines Umfangs um die Mittelachse verkleinert.
8. Verbindungsvorrichtung nach einer der optionalen Ausführungsformen 1, 2 oder 4 bis 7, wobei alle Endflächen parallel verlaufen zu einer gemeinsamen Kreislinie.
9. Verbindungsvorrichtung nach einer der optionalen Ausführungsformen 1, 2, oder 4 bis 8, wobei die Grundfläche einen kreisförmigen Umfang hat.
10. Verbindungsvorrichtung nach einer der optionalen Ausführungsformen 1 oder 3, wobei sich der Winkel, den die Innenwand im Bereich der Halteabschnitte mit der Kontaktfläche einschließt, vom jeweiligen Einsetzabschnitt, an den der entsprechende Halteabschnitt angrenzt, ausgehend vergrößert.
11. Verbindungsvorrichtung nach einer der optionalen Ausführungsformen 1, 3 oder 10,
   wobei die Innenwand angrenzend an jeden der Halteabschnitte an einem dem Einsetzabschnitt, an den der entsprechende Halteabschnitt angrenzt, abgewandten Ende einen Stoppbereich aufweisen, in dem die Innenwand einen Abstand von der Vertiefungsachse hat, der kleiner ist, als der kleinste Abstand der Innenwand von der Vertiefungsachse im Halteabschnitt.
12. Verbindungsvorrichtung nach einer der optionalen Ausführungsformen 1, 3, 10 oder 11, wobei die Kontaktfläche einen kreisförmigen Umfang hat.
13. Verbindungsvorrichtung nach einer der vorhergehenden optionalen Ausführungsformen 1 oder 4 bis 12, wobei das negative Verbindungselement ein Formelement aufweisen, wobei das Formelement durch eine zylinderförmige Wand begrenzt wird, deren Zylinderachse senkrecht zur Kontaktfläche steht und die über eine Ebene hinaussteht, in der sich die Kontaktfläche erstreckt und
   wobei das positive Verbindungselement eine Öffnung um die Mittelachse aufweist, deren Innendurchmesser gleich dem Außendurchmesser der zylinderförmigen Wand ist.
14. Verbindungsvorrichtung nach einer der optionalen Ausführungsformen 1 oder 4 bis 13, wobei das positive Verbindungselement auf einer der Erhebung abgewandten Seite der Grundfläche ein Schleifmittel aufweist, oder wobei das negative Verbindungselement auf seiner der Vertiefung abgewandten Seite ein Schleifmittel aufweist.

Im folgenden soll die Erfindung einer Figuren beispielhaft erläutert werden. Die in den Figuren gezeigten Merkmale können auch unabhängig von der konkreten Figur realisiert sein und zwischen verschiedenen Figuren kombiniert werden. Gleich Bezugszeichnung kennzeichnen gleiche oder entsprechende Merkmale.

Es zeigt
Figur 1 eine perspektivische Ansicht eines positiven Verbindungselementes,
Figur 2 eine Draufsicht des positiven Verbindungselementes,
Figur 3 eine Schnittansicht des in Figur 2 gezeigten positiven Verbindungselementes,
Figur 4 eine perspektivische Ansicht eines negativen Verbindungselementes,
Figur 5 eine Draufsicht des negativen Verbindungselement,
Figur 6 eine Seitenansicht des negativen Verbindungselementes,
Figur 7 eine Draufsicht auf das negatives Verbindungselement und
Figur 8 eine Draufsicht auf das negatives Verbindungselement mit zwei zueinander senkrechten Schnittansichten.

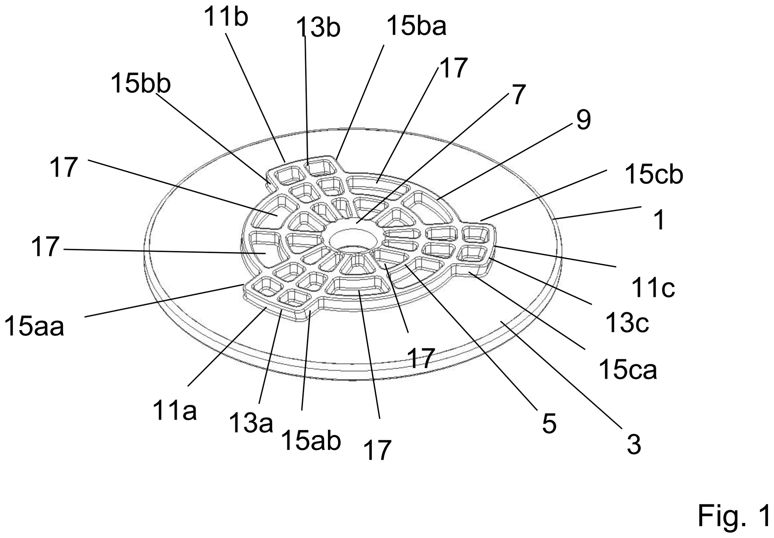

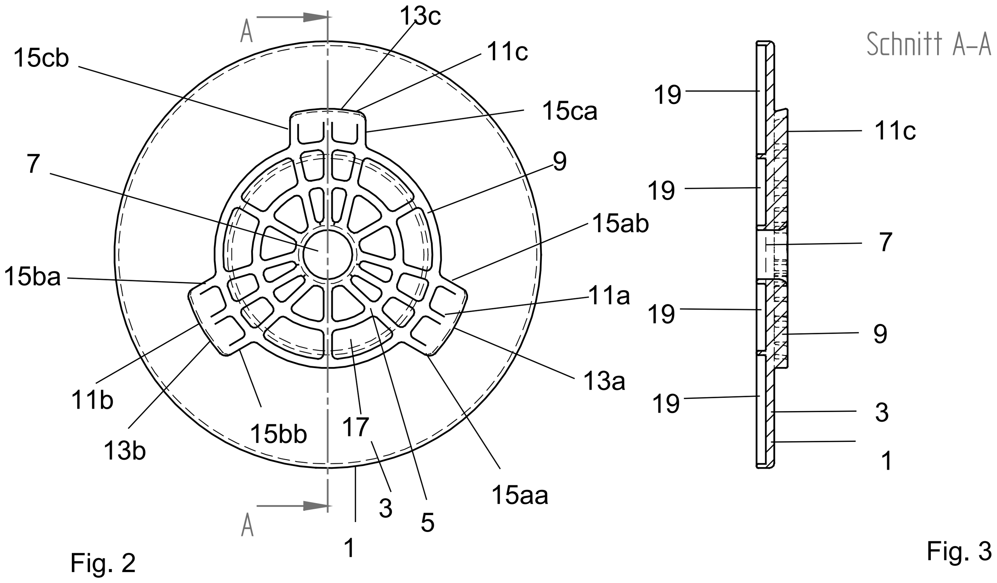

Figur 1 und Figur 2 zeigt ein positives Verbindungselement gemäß der Erfindung. Das positive Verbindungselement 1 weist eine Grundfläche 3 auf, die im gezeigten Beispiel einen kreisförmigen Umfang hat und eben ist. Auf der Grundfläche 3 ist eine Erhebung 5 angeordnet. Die Erhebung 5 und die Grundfläche 3 weisen eine zentrale Durchgangsöffnung 7 auf, die im gezeigten Beispiel kreisförmig um eine Mittelachse, um welch eine die Grundfläche 3 und ein Zentralbereich 9 der Erhebung radial symmetrisch verlaufen, ausgestaltet ist.

Die Erhebung 5 weist im gezeigten Bespiel drei Zapfen 11a, 11b und 11c auf, die um die gemeinsame Mittelachse angeordnet sind. Diese gemeinsame Mittelachse ist dabei eine gedachte Achse, die senkrecht auf der Grundfläche 3 steht.

Jeder der Zapfen weist eine Endfläche 13a, 13b und 13c auf, die diesen Zapfen 11a, 11b, 11c in zur Mittelachse radialer Richtung begrenzt.

Die Endflächen 13a, 13b und 13c schließen jeweils mit der Grundfläche 3 einen Winkel von kleiner als 90°, also einen spitzen Winkel, ein.

Der Zentralbereich 9, wie auch die Endflächen 13a, 13b und 13c folgen in ihrem Verlauf einer Kreisform, durch deren Mittelpunkt die Mittelachse verläuft. Die Erhebung 5 hat im Bereich der Zapfen 11a, 11b, 11c eine größere radiale Ausdehnung bezüglich der Mittelachse als in dem dazwischen liegenden Bereichen des Zentralbereichs 9.

Die Zapfen 11a, 11b und 11c weisen jeweils zwei Seitenflächen 15aa, 15ab, 15bb, 15ba, 15cb, 15ca auf, die im gezeigten Beispiel so verlaufen, dass die Seitenflächen 15aa, 15ab des gleichen Zapfens 11a, jeweils parallel zueinander liegen. Es ist aber auch vorteilhaft, wenn die Seitenflächen 15aa, 15ab, 15bb, 15ba, 15cb, 15ca jeweils in radialer Richtung bezüglich der Mittelachse verlaufen. In diesem Falle können die Seitenflächen 15aa, 15ab des gleichen Zapfens 11a jeweils einen Winkel von beispielsweise 15° einschließen. Sofern hier Aussagen über einen einzelnen Zapfen 11a gemacht werden, gelten diese vorteilhaft für die anderen Zapfen 11b und 11c entsprechend.

Im in Figur 1 gezeigten Beispiel weist die Erhebung 5 eine Vielzahl von Ausnehmungen 17 auf, zwischen denen Streben ausgebildet sind. Die Ausnehmungen 17 sind optional und dienen der Gewichtsreduktion des Verbindungselementes.

Im gezeigten Beispiel sind die Zapfen 11a, 11b und 11c jeweils symmetrisch zu einer Mitte der entsprechenden Endfläche 13a, 13b, 13c in Richtung des Umfangs um die Mittelachse. Die Zapfen 11a, 11b, 11c sind außerdem in Umfangsrichtung äquidistant angeordnet, sodass alle jeweils benachbarten Zapfen 11a, 11b, 11c und/oder alle Mitten der Endflächen 13a, 13b, 13c jeweils benachbarter Zapfen zueinander einen gleichen Winkel um Mittelachse einschließen. Generell ist dieser Winkel vorteilhafterweise gleich 360°/n, im Figur 1 gezeigten Beispiel mit drei Zapfen also 120°. Es ist zu erkennen, dass die Endflächen 13a, 13b, 13c zusammen dreizählig drehsymmetrisch um die Mittelachse verlaufen.

Der Winkel, den die Endflächen 13a, 13b, 13c mit der Grundfläche 3 einschließen kann sich vorteilhaft von einer Mitte einer Endfläche 13a, 13b, 13c zu einem Rand der Endfläche in Richtung des Umfangs um die Mittelachse verkleinern. Dieses Merkmal ist optional und in Figur 1 nicht gezeigt.

Figur 3 zeigt einen Schnitt entlang der in Figur 2 gezeigten Schnittlinie A-A. Der Schnitt erstreckt sich durch den Zapfen 11c und den Zentralbereich 9, der durch die Durchgangsöffnung 7 durchstoßen wird. Auf jener der in Figur 2 gezeigten Seite gegenüberliegenden Seite des positiven Verbindungselementes sind Strukturen 19, hier Vertiefungen 19, vorgesehen, die die Mittelachse kreisförmig umlaufen, und an denen beispielsweise Schleifmittel angeordnet werden können, wenn das Verbindungselement 1 als Teil eines Werkzeugspannsystems verwendet wird. Derartige Schleifmittel können beispielsweise wie in der DE 10 2016 220 766.0 gezeigt ausgestaltet sein.

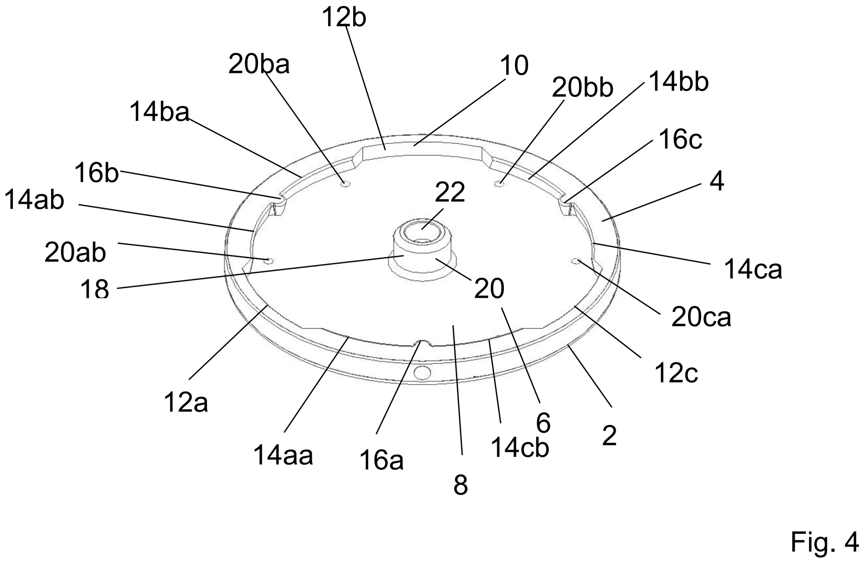

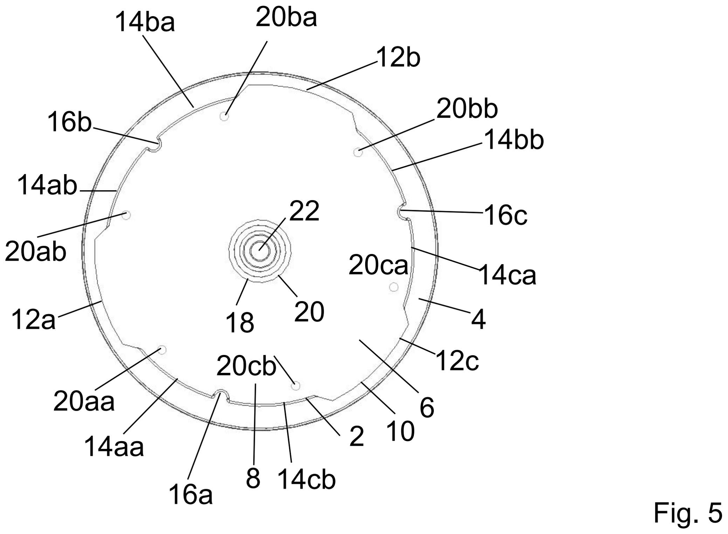

Figur 4 zeigt eine perspektivische Ansicht eines negativen Verbindungselementes 2 gemäß der vorliegenden Erfindung. Figur 5 zeigt eine entsprechende Draufsicht. Das negative Element 2 weist hier eine Kontaktfläche 4 auf mit einer in der Kontaktfläche eingebrachten Vertiefung 6. Die Vertiefung 6 wird im gezeigten Beispiel nach unten durch eine Bodenfläche 8 begrenzt.

Die Vertiefung 6 wird in zu einer senkrecht auf der Kontaktfläche 4 stehenden Vertiefungsachse radialer Richtung durch eine Innenwand 10 der Vertiefung begrenzt. Die Vertiefungsachse ist dabei eine gedachte Achse die von der Innenwand 10 umlaufen wird. Im gezeigten Beispiel hat das negative Verbindungselement 2 einen kreisförmigen Umfang, sodass die Vertiefungsachse hier durch den Mittelpunkt dieses kreisförmigen Umfangs verläuft.

Die Innenwand 10 weist im gezeigten Beispiel drei Einsetzabschnitte 12a, 12b und 12c auf, die einen sogenannten Einsetzradius bezogen auf die Vertiefungsachse haben. Die Innenwand 10 weist darüber hinaus sechs Halteabschnitte 14aa, 14ab, 14ba, 14bb, 14ca, 14cb auf, die so angeordnet sind, dass an jedem der drei Einsetzabschnitte 12a, 12b, 12c jeweils einer der Halteabschnitte 14aa, 14ab, 14ba, 14bb, 14ca, 14cb in beide Richtungen entlang der Innenwand 10 um die Vertiefungsachse angrenzt. So grenzt beispielsweise an den Einsetzabschnitt 12a in Richtung entgegen den Uhrzeigersinn der Halteabschnitt 14aa an und in Richtung im Uhrzeigersinn der Halteabschnitt 14b. Entsprechendes gilt für die anderen Einsetzabschnitte 12b und 12c.

Die Innenwand 10 schließt im Bereich jedes der Halteabschnitte 14aa, 14ab, 14ba, 14bb, 14ca, 14cb mit der Kontaktfläche 4 einen Winkel von größer als 270° ein. Entsprechend schließt die Innenwand 10 mit der im Beispiel gezeigten Bodenfläche 8 einen Winkel von kleiner als 90° ein.

Darüber hinaus hat die Innenwand 10 im Bereich jedes der Halteabschnitte 14aa, 14ab, 14ba, 14bb, 14ca, 14cb einen, im folgenden als Halteabstand bezeichneten, maximalen Abstand von der Vertiefungsachse, der kleiner ist als der Einsetzradius im Bereich der Einsetzabschnitte 10. Ist das im Figur 4 gezeigte negative Verbindungselement 2 zur Verbindung mit dem in den Figuren 1 bis 3 gezeigten positiven Verbindungselement 1 ausgestaltet, so ist ein Abstand der Endflächen 13a, 13b, 13c des positiven Verbindungselementes 1 von dessen Mittelachse kleiner oder gleich dem Einsetzradius und größer als der besagte Halteabstand.

Im gezeigten Beispiel weist die Innenwand 10 angrenzend an jeden der Halteabschnitte 14aa, 14ab, 14ba, 14bb, 14ca, 14cb einen Stoppbereich 16a, 16b, 16c auf, in dessen Bereich die Innenwand 10 einen Abstand von der Vertiefungsachse hat, der kleiner ist als, als der kleinste Abstand der Innenwand 10 von der Vertiefungsachse im Bereich der Halteabschnitte 14aa, 14ab, 14ba, 14bb, 14ca, 14cb.

Die in Figur 4 gezeigte Ausgestaltung ist der Gestalt, dass jeweils ein Teilbereich der Innenwand 10, der einen Stoppbereich 16a, einen ersten Halteabschnitt 14aa, einen Einsetzbereich 12a, einen zweiten Haltebereich 14ab und einen zweiten Stoppbereich 16b umfasst symmetrisch ist in Umfangsrichtung um eine Mitte des entsprechenden Einsetzbereiches 12a. Entsprechendes gilt für die Einsetzbereiche 12b und 12c.

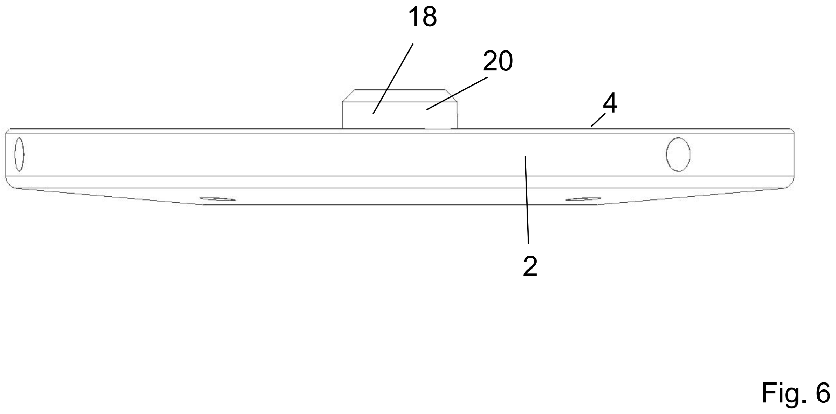

Im gezeigten Beispiel weist das negative Verbindungselement 2 ein Formelement 18 auf, dass durch eine zylinderförmige Außenwand 20 begrenzt wird, deren Zylinderachse senkrecht steht zur Kontaktfläche 4. Das Formelement steht über eine Ebene hinaus, in der sich die Kontaktfläche 4 erstreckt. Dies ist besonders gut in der Seitenansicht in Figur 6 zu erkennen. Ist das in Figur 4 gezeigte negative Verbindungselement 2 zur Verbindung mit dem in Figur 1 bis 3 gezeigten positiven Verbindungselement 1 vorgesehen, so kann das Formelement 18 in die Durchgangsöffnung 7 des positiven Verbindungselementes 1 eingeführt werden und dadurch die Zentrierung vereinfachen. Entsprechend kann die Durchgangsöffnung 7 des positiven Verbindungselementes 1 einen Innendurchmesser haben, der gleich dem Außendurchmesser der zylinderförmigen Wand 2 ist. Im gezeigten Beispiel weist das Formelement 18 eine zentrale Öffnung 22 auf, die beispielsweise zur Aufnahme einer Antriebswelle vorgesehen sein kann.

Der Winkel, den die Innenwand 10 im Bereich der Halteabschnitte 14aa, 14ab, 14ba, 14bb, 14ca, 14cb mit der Kontaktfläche 4 einschließt, vergrößert sich im Figur 4 und 5 gezeigten Beispiel vom jeweiligen Einsetzabschnitt 12a, 12b, 12c an ausgehend. Hierdurch können sich die Zapfen 11a, 11b, 11c des positiven Verbindungselementes 1 hierin festziehen bis sie an die Stoppbereiche 16a, 16b beziehungsweise 16c anstoßen. Es ist zu erkennen, dass dies bei Drehung des positiven 1 gegenüber dem negativen 2 Verbindungselement in beide Richtungen funktioniert.

In der Bodenfläche 8 sind Bohrungen 20ab, 20ba, 20bb, 20ca, 20cb vorgesehen, in welche Stifte zur Selektion der Drehrichtung, in welcher das positive Verbindungselement gegenüber dem negativen Verbindungselement drehbar ist, einsetzbar sind. Diese Bohrungen sind entsprechend jeweils vor den Haltebereichen 14aa, 14ab, 14ba, 14bb, 14ca, 14cb angeordnet.

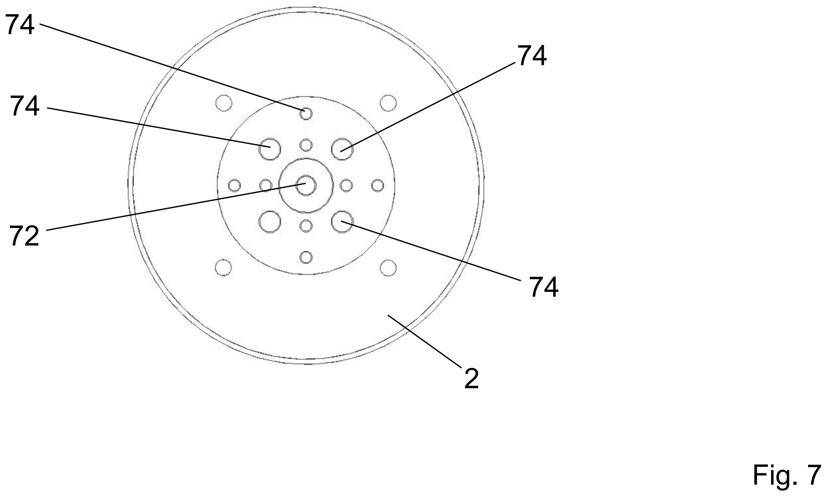

Figur 7 zeigt eine Draufsicht auf das in den Figuren 4 bis 6 gezeigte negative Verbindungselement 2 auf dessen der Kontaktfläche 4 gegenüberliegende Seite. In einem Zustand, in dem das negative Verbindungselement 2 mit dem positiven Verbindungselement 1 verbunden ist, ist die in Figur 7 gezeigte Seite dem positiven Verbindungselement 1 abgewandt. Zu erkennen ist, dass das negative Verbindungselement 2 eine Zentrale Öffnung 72 aufweist, die zum Beispiel zum Einbringen einer Antriebswelle vorgesehen sein kann. Diese Oberfläche weist darüber hinaus eine Vielzahl weiterer Bohrungen 74 auf, in die Elemente zum Antrieb oder zur Drehmomentübertragung eingebracht werden können. Auf diese Weise kann die Verbindungsvorrichtung als Werkzeugspannsystem für rotierende Anwendungen wie beispielsweise für die Entgratung eingesetzt werden.

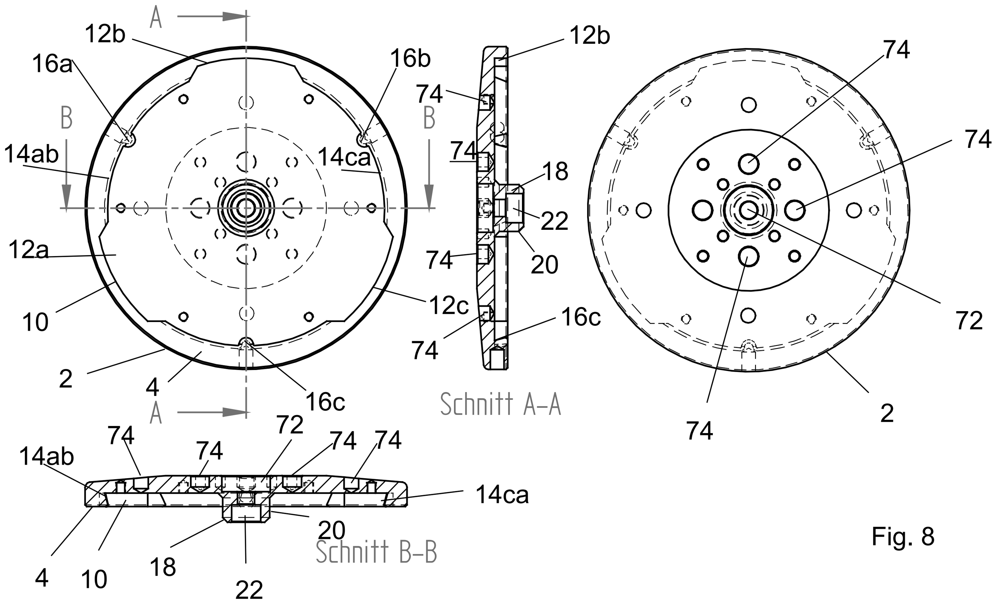

Figur 8 zeigt nochmals das in den Figuren 4 bis 7 gezeigte negative Verbindungselement 2 mit einer Schnittansicht entlang der Schnittachse A-A sowie einer Schnittansicht entlang der Schnittachse B-B. Zu erkennen sind die auf jener der Kontaktfläche 4 abgewandten Seite angebrachten Bohrungen 74, sowie die Öffnung 73. Der Schnitt A-A verläuft durch den Stoppbereich 16c und den Einsetzbereich 12b. Der Schnitt B-B verläuft zum einen durch den Haltebereich 14ab und zum anderen durch den Haltebereich 14ca. Bezüglich der weiteren der in Figur 8 gezeigten Merkmale soll auf die Beschreibung bezüglich der Figuren 4 bis 7 verwiesen werden.

Zusammenfassend kann also die Vorrichtung als aus zwei Verbindungselementen aufgebaut angesehen werden. Werden die Verbindungselemente axial gefügt und anschließend verdreht, so ergibt sich eine formschlüssige Verbindung. Je nach Drehbewegung kann aufgrund der symmetrischen Gestaltung der Verbindungselemente ein Verbindung entsprechend der gewünschten Drehrichtung realisiert werden. Vorteilhaft ist die symmetrische Gestaltung unter anderem hinsichtlich der Unwucht, da der Massenschwerpunkt stets auf der Drehachse liegen kann.

Im Verbindungsbereich können die Elemente eine keilförmige Geometrie, beispielsweise mit einem Winkel von 15°, aufweisen, wobei eines der beiden Verbindungselemente die komplementäre Keilgeometrie aufweisen kann. Während die keilförmige Kontur auf einem Verbindungselement rotationssymmetrisch ausgeführt sein kann, sollte vorteilhafter Weise das andere Verbindung Element im Verbindungsbereich eine verjüngende Kontur aufweisen, um eine festsitzende bzw. festziehende Verbindung zu realisieren.

Um ein überdrehen der Verbindung zu verhindern, können Überdrehschutzelemente in Form von Schrauben, Nieten, oder Materialanhäufungen eingesetzt werden. Ein Schutz zur Verbindung in eine falsche Drehrichtung kann ebenfalls über Schrauben, Nieten oder Materialanhäufung erfolgen.

Ein unbeabsichtigtes Lösen der Verbindungselemente kann beispielsweise durch zusätzliche Sicherungselemente verhindert werden. Ein Sicherungselement kann beispielsweise in Form eines rastenden Elements wie einem Raststück, Druckelementen oder ähnlichem ausgeführt sein.

Vertiefungen in Form von Bohrungen, Fräsungen oder ähnlichem an den Verbindungselementen können zum Öffnen und Schließen der Vorrichtung verwendet werden.

## Patentansprüche

1. Verbindungsvorrichtung aufweisend
ein positives Verbindungselement (1) und
ein negatives Verbindungselement (2),
wobei das positive Verbindungselement (1) eine Grundfläche (3) und eine auf der Grundfläche (3) angeordnete Erhebung (5) aufweist,
wobei die Erhebung n Zapfen (11a, 11b, 11c), mit n größer oder gleich zwei, aufweist, wobei die n Zapfen (11a, 11b, 11c) um eine gemeinsame Mittelachse angeordnet sind, die senkrecht auf der Grundfläche (3) steht,
wobei jeder der Zapfen eine Endfläche (13a, 13b, 13c) aufweist, die ihn in zur Mittelachse radialer Richtung begrenzt,
wobei die Endflächen (13a, 13b, 13c) mit der Grundfläche (3) zumindest einen Winkel von kleiner als 90° einschließen,
wobei das negative Verbindungselement (2) eine Kontaktfläche (4) mit einer in der Kontaktfläche (4) eingebrachten Vertiefung (6) aufweist,
wobei die Vertiefung (6) in zu einer senkrecht auf der Kontaktfläche (4) stehenden Vertiefungsachse radialer Richtung durch eine Innenwand (10) der Vertiefung (6) begrenzt wird,
wobei die Innenwand (10) n Einsetzabschnitte (12a, 12b, 12c) mit einem Einsetzradius bezogen auf die Vertiefungsachse aufweist,
wobei die Innenwand (10) 2n Halteabschnitte (14aa, 14ab, 14ba, 14bb, 14ca, 14cb) aufweist,
wobei an jeden der n Einsetzabschnitte (12a, 12b, 12c) in beide Richtungen entlang der Innenwand (10) um die Vertiefungsachse jeweils einer der Halteabschnitte (14aa, 14ab, 14ba, 14bb, 14ca, 14cb) angrenzt,
wobei die Innenwand (10) im Bereich jedes der Halteabschnitte (14aa, 14ab, 14ba, 14bb, 14ca, 14cb) mit der Kontaktfläche (4) einen Winkel von größer als 270° einschließt und einen als Halteabstand bezeichneten maximalen Abstand von der Vertiefungsachse an jenem Punkt, an dem die Innenwand (10) an die Kontaktfläche (4) angrenzt, hat, der kleiner ist, als der Einsetzradius,
wobei ein Abstand der Endflächen (13a, 13b, 13c) von der Mittelachse kleiner oder gleich dem Einsetzradius ist und größer ist als der Halteabstand.

2. Verbindungsvorrichtung aufweisend ein positives Verbindungselement (1),
wobei das positive Verbindungselement (1) eine Grundfläche (3) und eine auf der Grundfläche (3) angeordnete Erhebung (5) aufweist,
wobei die Erhebung (5) n Zapfen (11a, 11b, 11c), mit n größer oder gleich zwei, aufweist, wobei die n Zapfen (11a, 11b, 11c) um eine gemeinsame Mittelachse angeordnet sind, die senkrecht auf der Grundfläche (3) steht,
wobei jeder der Zapfen (11a, 11b, 11c) eine Endfläche (13a, 13b, 13c) aufweist, die ihn in zur Mittelachse radialer Richtung begrenzt,
wobei die Endflächen (13a, 13b, 13c) mit der Grundfläche (3) zumindest einen Winkel von kleiner als 90° einschließen,
wobei die Endflächen der Zapfen (11a, 11b, 11c) jeweils in einer Richtung entlang eines Umfangs symmetrisch sind um eine Mitte der jeweiligen Endfläche (13a, 13b, 13c).

3. Verbindungsvorrichtung aufweisend ein negatives Verbindungselement (2),
wobei das negative Verbindungselement (2) eine Kontaktfläche (4) mit einer in der Kontaktfläche (4) eingebrachten Vertiefung (6) aufweist,
wobei die Vertiefung (6) in zu einer senkrecht auf der Kontaktfläche (4) stehenden Vertiefungsachse radialer Richtung durch eine Innenwand (10) der Vertiefung (6) begrenzt wird,
wobei die Innenwand (10) n Einsetzabschnitte (12a, 12b, 12c) mit einem Einsetzradius bezogen auf die Vertiefungsachse aufweist, mit n größer oder gleich zwei,
wobei die Innenwand 2n Halteabschnitte (14aa, 14ab, 14ba, 14bb, 14ca, 14cb) aufweist,
wobei an jeden der n Einsetzabschnitte (12a, 12b, 12c) in beide Richtungen entlang der Innenwand (10) um die Vertiefungsachse jeweils einer der Halteabschnitte (14aa, 14ab, 14ba, 14bb, 14ca, 14cb) angrenzt,
wobei die Innenwand (10) im Bereich jedes der Halteabschnitte (14aa, 14ab, 14ba, 14bb, 14ca, 14cb) mit der Kontaktfläche einen Winkel von größer als 270° einschließt und einen als Halteabstand bezeichneten maximalen Abstand von der Vertiefungsachse an jenem Punkt, an dem die Innenwand (10) an die Kontaktfläche (4) angrenzt, hat, der kleiner ist, als der Einsetzradius.

4. Verbindungsvorrichtung nach einem der Ansprüche 1 oder 2, wobei die Zapfen (11a, 11b, 11c) jeweils symmetrisch zu einer Mitte der entsprechenden Endfläche (13a, 13b, 13c) in Richtung eines Umfangs um die Mittelachse sind.

5. Verbindungsvorrichtung nach einem der Ansprüche 1, 2 oder 4, wobei alle jeweils benachbarten der Zapfen (11a, 11b, 11c) und/oder alle Mitten der Endflächen (13a, 13b, 13c) jeweils benachbarter Zapfen (11a, 11b, 11c) zueinander einen gleichen Winkel um die Mittelachse einschließen.

6. Verbindungsvorrichtung nach einem der Ansprüche 1, 2, 4 oder 5, wobei alle Endflächen (13a, 13b, 13c) zusammen n-zählig drehsymmetrisch um die Mittelachse verlaufen.

7. Verbindungsvorrichtung nach einem der Ansprüche 1, 2 oder 4 bis 6, wobei sich der Winkel, den die Endflächen (13a, 13b, 13c) mit der Grundfläche (3) einschließen von einer Mitte der Endfläche (13a, 13b, 13c) zu einem Rand der Endfläche (13a, 13b, 13c) in Richtung eines Umfangs um die Mittelachse verkleinert.

8. Verbindungsvorrichtung nach einem der Ansprüche 1, 2 oder 4 bis 7, wobei alle Endflächen (13a, 13b, 13c) auf einer gemeinsamen Kreislinie liegen.

9. Verbindungsvorrichtung nach einem der Ansprüche 1, 2, oder 4 bis 8, wobei die Grundfläche (3) einen kreisförmigen Umfang hat.

10. Verbindungsvorrichtung nach einem der Ansprüche 1 oder 3, wobei sich der Winkel, den die Innenwand (10) im Bereich der Halteabschnitte (14aa, 14ab, 14ba, 14bb, 14ca, 14cb) mit der Kontaktfläche (4) einschließt, vom jeweiligen Einsetzabschnitt (12a, 12b, 12c), an den der entsprechende Halteabschnitt (14aa, 14ab, 14ba, 14bb, 14ca, 14cb) angrenzt, ausgehend vergrößert.

11. Verbindungsvorrichtung nach einem der Ansprüche 1, 3 oder 10, wobei die Innenwand (10) angrenzend an jeden der Halteabschnitte (14aa, 14ab, 14ba, 14bb, 14ca, 14cb) an einem dem Einsetzabschnitt (12a, 12b, 12c), an den der entsprechende Halteabschnitt angrenzt, abgewandten Ende einen Stoppbereich (16a, 16b, 16c) aufweisen, in dem die Innenwand (10) einen Abstand von der Vertiefungsachse hat, der kleiner ist, als der kleinste Abstand der Innenwand (10) von der Vertiefungsachse im Halteabschnitt.

12. Verbindungsvorrichtung nach einem der Ansprüche 1, 3, 10 oder 11, wobei die Kontaktfläche (4) einen kreisförmigen Umfang hat.

13. Verbindungsvorrichtung nach Anspruch 1,
wobei das negative Verbindungselement (2) ein Formelement (18) aufweist, wobei das Formelement (18) durch eine zylinderförmige Wand (20) begrenzt wird, deren Zylinderachse senkrecht zur Kontaktfläche (4) steht und die über eine Ebene hinaussteht, in der sich die Kontaktfläche (4) erstreckt und
wobei das positive Verbindungselement (1) eine Öffnung (7) um die Mittelachse aufweist, deren Innendurchmesser gleich dem Außendurchmesser der zylinderförmigen Wand (20) ist.

14. Verbindungsvorrichtung nach Anspruch 1, wobei das positive Verbindungselement (1) auf einer der Erhebung abgewandten Seite der Grundfläche ein Schleifmittel aufweist, oder wobei das negative Verbindungselement (2) auf seiner der Vertiefung (6) abgewandten Seite ein Schleifmittel aufweist.
